# EUROPEAN PATENT SPECIFICATION

(11) **EP 1 985 590 B1**
(45) Date of publication and mention of the grant of the patent: **13.01.2010**
(21) Application number: 08008013.8
(22) Date of filing: 25.04.2008
(51) Int. Cl.: C02F 11/06, C02F 11/14, C10L 5/46, C22B 3/10

(54) **Sawdust based mixture comprising iron-containing waterworks sludge from drinking water treatment plants**
Mischung mit Sägemehl umfassend eisenhaltigen Wasserwerkschlamm von Trinkwasseraufbereitungsanlagen
Mélange à base de sciure comprenant de la boue contenant du fer provenant de stations de traitement d'eau en vue de la production d'eau potable

(30) Priority: 27.04.2007 CZ 20070312
(43) Date of publication of application: 29.10.2008
(73) Proprietor: Jihoceska Universita V Ceskych Budejovicich, 37005 Ceské Budejovice (CZ)
(72) Inventor: Kolàr, Ladislav, Prof. Ing. DrSc., 37005 Ceské Budejovice (CZ); Kuzel, Stanislav, Prof.Ing. CSc., 37005 Ceské Budejovice (CZ); Broucek, Josef, Ing., 37007 Ceské Budejovice (CZ); Klimes, Frantisek, Doc.Ing. CSc., 37005 Ceské Budejovice (CZ); Peterka, Jiri, Ing., 37001 Ceské Budejovice (CZ)
(74) Representative: Sedlák, Jirí

(56) References cited:
- EP-A- 0 549 861
- WO-A-92/07049
- WO-A-97/01513
- FR-A- 2 867 773
- JP-A- 2006 152 097
- US-A- 3 951 613
- PETTERSSON ET AL: "Leaching of ashes from co-combustion of sewage sludge and wood-Part I: Recovery of phosphorus" BIOMASS AND BIOENERGY, PERGAMON, OXFORD, GB, vol. 32, no. 3, 3 December 2007 (2007-12-03), pages 224-235, XP022479375 ISSN: 0961-9534
- DE SENA R F ET AL: "Biofuel application of biomass obtained from a meat industry wastewater plant through the flotation process - a case study" RESOURCES, CONSERVATION & RECYCLING ELSEVIER NETHERLANDS, vol. 52, no. 3, January 2008 (2008-01), pages 557-569, XP002485413 ISSN: 0921-3449

## Description

### Background and summary of the invention

The invention specifies the method of treatment of iron-containing waterworks sludge from drinking water-treatment plants aimed at the utilisation of the energy value of sludge organic components.

### Prior Art

Sludge from drinking water-treatment plants is produced by clarification of river water with chemical coagulants; the purpose of their use is to form in water voluminous floccules with high absorption activity that will intercept on their surface undissolved organic and mineral particles carried along in water that will be entrained at subsequent sedimentation. Sludge, also called "coagulation sludge" or "waste waterworks sludge", is produced in this way. It contains mainly ferric or aluminium hydroxide, which will form these voluminous floccules with purifying effects. Floccules of hydroxides are formed from iron salts added to water with lime or most frequently from aluminium sulphate, which many times does not need the addition of lime to form floccules of aluminium hydroxide because the alkalinity of raw river water is often sufficient to cause the formation of Al(OH)₃.

The formed floccules will have the expected purifying effect if they are large enough; and such floccules will be separated more easily from purified water by sedimentation and subsequent filtration. So called "flocculation", i.e. slow stirring of purified water with formed fine floccules of the above-mentioned hydroxides, is used to support the growth of floccules.

Previously, clarification with aluminium sulphate was preferred. Currently, clarification with iron salts is mostly used for economic reasons because they can be easily prepared from cheap iron-containing compounds (e.g. green vitriol) by oxidation with e.g. chlorine or in another way.

The composition of waterworks sludge is obvious from the above text. First of all, it contains a clarifying agent, i.e. ferric or aluminium hydroxide. Coarse and colloid dispersions of insoluble clay (mineral) and organic substances get from purified river water to sludge. Sludge also contains dissolved coloured high-molecular substances, e.g. humic substances, and living and non-living biomass of algae, protozoa, bacteria and higher organisms.

Original sludge from clarification basins contains 1 - 5% of dry matter and the degree of lability of its organic substances differs according to biochemical conditions in the river and whether there was a smaller or a larger degradation of water-borne organic substances in the stream in the process of its self-purification. This is the reason why the biological oxygen demand (BOD₅) of sludge from clarification basins highly fluctuates in a large interval of 30 - 1 000 mg/l O₂. The value of the chemical oxygen demand (COD) of this sludge fluctuates in an interval of 500 - 15 000 mg/l O₂ and therefore it is quite high compared to BOD₅ (Oda 1968).

Obviously, the majority of the organic substances retained by waterworks sludge are high-molecular-weight substances while their biological decomposition is difficult and slow, which causes problems in their further use.

Many proposals have been made that organic substances of this sludge could be used for soil fertilisation; therefore it is recommended to compost the sludge and to incorporate it into agricultural soils after its oxidation treatment.

Such proposals are in fact a very dangerous measure for agricultural soils that could decrease the potential soil capability of these soils quite substantially.

In relation to an increase in their potential soil capability soils need labile organic matters that may be a source of energy for the soil microedaphon. Therefore they must be able to mineralise to CO₂ relatively quickly. Soils also need the transformed high-molecular-weight substances that were formed in the process of humification but it should be humic acids, not fulvic acids. These substances do not mineralise, so they cannot provide energy for the soil microedaphon, but they are able to ensure the ion exchange, protecting soil nutrients from leaching.

The organic substances of waterworks sludge do not belong either to the first or to the second group and they will not improve their quality in compost because they are slow from the aspect of the reaction rate, composts cannot reach the required temperature and it leads to the formation of decomposed organic substances but practically valueless ones that may have a certain soil conditioning effect but it is a poor result.

In addition, on soils that were formed on acid substrates (it is the majority of soils in the CZ) aluminium- and particularly iron-containing sludge releases trivalent cations that dramatically increase the content of the fraction of ferric phosphates in soils, which is a form of phosphorus factually unavailable to plants. Taking into account that in Czech agriculture the creation of a sufficient reserve of mobile phosphorus in soils lasted for several tens of decades, high costs of the purchase of P fertilisers mainly in the seventies and eighties of the last century and the fact that the crops in Czech agriculture have taken up nutrients from this reserve for their average yields until now, the immobilisation of this reserve by the application of waterworks sludge into soils after composting is counterproductive.

On drained sludge beds surplus water is removed from sludge either without any agents (its residual water content is still unsatisfactory) or by the addition of other dewatering and coagulating agents and technologies.

There exist many methods of sludge dewatering whereas their description is not an object of this document.

When dewatering with lime coagulation is used, this sludge treatment reduces the content of utilisable combustible components of sludge (cellulose and lignin) to about a half.

A number of methods of sludge treatment and utilisation have been described but they are applicable mainly to sludge from municipal waste water and sludge from industrial waste water - only a small attention has been paid to waterworks sludge because the price of aluminium and ferric clarifiers was relatively very low until recently, the sludge volume in relation to sewage sludge has always been quite small, and as only relatively clean river waters are treated to produce drinking water, the waterworks sludge did not mostly contain either admixtures that would be interesting for hygienists and toxicologists or such admixtures that would be worth isolating from the sludge. In addition, it is believed that dewatered sludge is a good admixture to compost and can be used for fertilisation as described above.

Methods of applying sludge for fuel are known. This application describes the Korean Patent KR 151 991 (1998), where the fuel for furnaces is a mixture of oil, iron-containing sludge or waste from rolling mills, activated sludge and coal. The moisture content of fuel should be below 12%, and percentage intervals of the components are given.

U.S. Patent US 553 18 05 (1996) is similar, in which sludge is mixed with sources of carbon, the mixture is pelleted, extruded and burnt in a furnace at a temperature > 1 420° C when Fe is produced. Waste sludge, coal, lignite, waste graphite and sludge from activation are recommended as C sources. In this process the slag rich in calcium is produced, from which 50 - 95% of sludge-captured zinc can be isolated.

It is however stated in U.S. Patent US 2006 09 6163 that dewatered sludge can be ashed efficiently only if an external fuel is used. It is proposed to warm the sludge up to a temperature at which thermal destruction of biomass starts. The result is a nonhydrophilic product that is an efficient biofuel.

The International Patent Application WO 92/07049 discloses sewage sludge treatment by mixing the sewage sludge mixture with a coagulant. The mixture is subsequently dried by pressing. The mixture undergoes disinfection by steam and finally is cut into briquettes or pressed to form biodegradable planks.

The Japanese Patent 2006152097 discloses the production of solid fuel applying sewage sludge as raw material. The sewage sludge is first treated under the temperature of 250-500 C° to reduce the content of water to 0 to 50%. To eliminate the typical smell and to enhance the binding ability of the mixture, waste oil is added.

The European Patent Application EP 0 549 861 discloses sewage sludge treatment by combustion, when the sludge is mixed with inflammable material. The crumbled composite material is dried and subsequently ground and pelletized. The pellets can be burnt together with coal in large combustion plants.

The article "Treatment and Disposal of Waterworks Sludge in Selected European Countries" (H. Hort et al., Foundation for Water Research, FR 0428, April 1994, page 71) informs on the method of regeneration of iron containing coagulants from waterworks sludge suggesting that the sludge containing 45 - 50% by weight of iron and 2 - 6% by weight of carbon be incinerated under the temperature of 300 °C and the waste ash be mixed with hydrogen chloride acid to dissolve the iron. The disadvantage of this method consists in the fact that the waterworks sludge cannot be used as fuel by itself having poor inflammability and much energy has to be applied for the sludge to be burnt.

The invention aims at disclosing such sawdust based mixture for the production of pelleted and briquetted fuel that will be appropriate for treatment of iron-containing waterworks sludge from drinking water treatment plants maintaining the possibility of regeneration of clarifying salt.

### Principle of the invention

This problem is solved on the basis of the treatment of iron-containing waterworks sludge according to this present invention. Its principle is as follows: the mixture contains a solid component composed of sawdust, an oxidizer of saltpetre type and iron containing waterworks sludge from drinking water treatment plants; to prepare the mixture, dry sawdust is soaked with a solution of an oxidizer of saltpetre type; the soaked sawdust is dried and subsequently mixed with dewatered dried iron containing waterworks sludge at a ratio adjusting the total carbon content in the mixture to 40% at least; the amount of the solid component in the mixture is 60 to 98% by weight; the mixture further contains a binder in the form of modified maize flour dispersed in a solution containing sodium hydroxide, sodium hypochlorite, lime milk and bacterial α-amylase and it also further contains a thermoplastic agent in an amount of 0.05 to 0.15% by weight in the form of an aqueous dispersion of native rye flour. These additives improve the process of pelleting or briquetting, and they also improve physical properties of these products such as strength, abrasion resistance, etc.

In an advantageous realisation, the oxidiser of saltpetre type is a 20% solution of KNO₃, which is used for sprinkling the sawdust, and the binder is present in the mixture in an amount of 0.5% to 1.5% by weight. It is advantageous to use KNO₃ because it is a cheap and easily available raw material.

From the mixture pelleted or briquetted fuel is produced that is burnt in a heating installation of lower capacity; ash from burning is collected in a vessel into which a 20% solution of HCl is added under continuous stirring until the constant pH value is reached; finally, the liquid fraction consisting of FeCl₃ is separated by filtration and after analytical determination of the concentration it will be reused for the clarification of raw river water in water-treatment plants. The process is technologically very simple and almost wasteless. Hydrochloric acid is efficient and safe from the aspect of manipulation by the staff.

Advantages of the solution according to the invention are that it allows the energetic utilisation of organic matter in iron-containing waterworks sludge, maintaining low costs and applying a simple method.

### Detailed description of the preferred embodiments

Naturally, particular examples of the invention realisation specified and described below are presented for illustration, not as a limitation of realisations of the invention to the given examples. Based on routine experimentation experts that are familiar with the state of the art will find or will be able to identify a larger or smaller number of equivalents to specific realisations of the invention that are specially described here. Also these equivalents will be included in the range of subsequent patent claims.

The sawdust based mixture for the production of pelleted and briquetted fuel contains a solid component composed of sawdust, an oxidizer of saltpetre type, and iron containing waterworks sludge from drinking water treatment plants. The mixture is prepared so, that dry sawdust is soaked with a solution of an oxidizer of saltpetre type being a 20% solution of KNO₃. The soaked sawdust is dried and subsequently mixed with dewatered dried iron containing waterworks sludge from drinking water treatment plants at a ratio adjusting the total carbon content in the mixture to 40% at least. The amount of the solid component in the mixture is 60 to 98% by weight. The mixture further contains a binder in an amount of 0.5 to 1.5% by weight in the form of modified maize flour dispersed in a solution containing sodium hydroxide, sodium hypochlorite, lime milk and bacterial α-amylase and it also further contains a thermoplastic agent in an amount of 0.05 to 0.15% by weight in the form of an aqueous dispersion of native rye flour.

Iron-containing waste (coagulation) waterworks sludge from water-treatment plants is dewatered at first and then it is dried. It is not important whether the sludge is dewatered in a sludge bed or a sludge-dewatering technology with the application of dehydrating or coagulating agent or without it is used.

Chemical analysis of sludge is done, and the content of total carbon and content of total iron are determined.

Dry sawdust is spread on a horizontal plane to make a layer of about 20 cm and sprinkled with 20% solution of waste KNO₃ at a dose of 50 l of the solution per 100 kg of sawdust; it is mixed by stirring the layer and dried in the air.

Sawdust as a cellulose-lignin material contains 50% of carbon (it is the value usual for spruce wood) because pure lignin contains 65% C and pure cellulose 44% C. In order to reach the calorific value of 16 MJ/kg at least (e.g. rape straw has an analogical content) the mixture of sawdust and waterworks sludge should have the carbon content amounting to 40% C at least.

Based on the carbon content according to the analysis of the used waterworks sludge dried sludge is added to sawdust at such a ratio that the resultant mixture will contain 40% C.

The cross rule is applied:

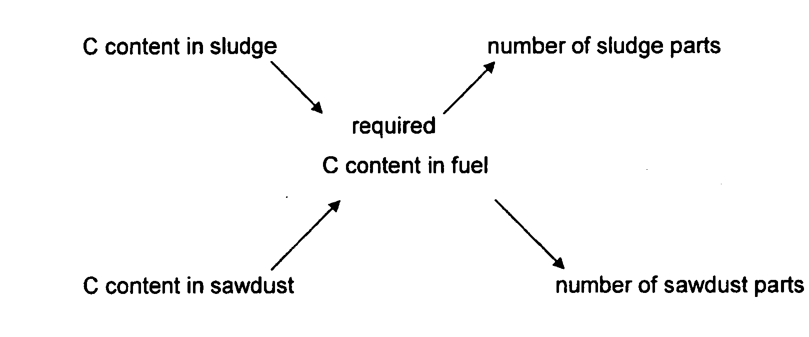

Hence:

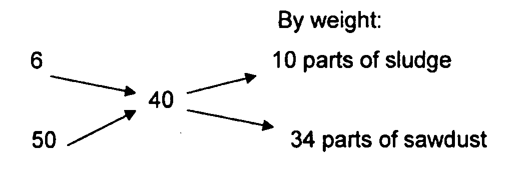

Fuel pellets are produced from a mixture of sawdust and sludge. Binders such as modified maize flour and aqueous dispersion of native rye flour as a thermoplastic agent improve the properties of the pellets. The addition of an oxidiser (KNO₃) improves the burning of pellets because their carbon content and their calorific value are at the limit of capacities and operational use efficiency for boilers of lower capacity where these pellets are burnt.

Ash from the burning of pellets is collected into a large plastic vessel equipped with a cock on the bottom that has a simple cloth filter on the inner side. From the ash the iron containing clarifying salt FeCl₃ can be regenerated.

### Industrial applicability

The solution according to the invention is applicable to the treatment of waste iron-containing waterworks sludge for the production of pelleted or briquetted fuel designed for heating installations of lower capacities and for the regeneration of an iron-containing clarifying salt for repeated use in a water-treatment plant.

## Claims

1. A sawdust based mixture for the production of pelleted or briquetted fuel **characterized in that** the mixture contains a solid component composed of sawdust, an oxidizer of saltpetre type and iron containing waterworks sludge from drinking water treatment plants; to prepare the mixture, dry sawdust is soaked with a solution of an oxidizer of saltpetre type; the soaked sawdust is dried and subsequently mixed with dewatered dried iron containing waterworks sludge from drinking water treatment plants at a ratio adjusting the total carbon content in the mixture to 40% at least; the amount of the solid component in the mixture is 60 to 98% by weight; the mixture further contains a binder in the form of modified maize flour dispersed in a solution containing sodium hydroxide, sodium hypochlorite, lime milk and bacterial α-amylase and it also further contains a thermoplastic agent in an amount of 0.05 to 0.15% by weight in the form of an aqueous dispersion of native rye flour.

2. The sawdust based mixture according to claim 1 **characterized in that** the oxidizer of saltpetre type is a 20% solution of KNO₃, and the binder is present in the mixture in an amount of 0.5 to 1.5% by weight.

## Patentansprüche

1. Die Mischung auf der Basis der Holzspäne für die Herstellung des pelletierten oder brikettierten Brennstoffs, **dadurch gekennzeichnet, dass** die Mischung eine festen Bestandteil beinhaltet, der aus Holzspänen, dem Oxidiermittel des Salpeter-Typs und eisenhaltigem Wasseranlageschlamm aus den Trinkwasseraufbereitungsanlagen besteht; zur Vorbereitung der Mischung werden trockene Holspäne mit einer Lösung von Oxidiermittel des Salpeter-Typs getränkt; getränkte Holzspäne werden getrocknet und anschließend mit dem trockengelegten trockenen eisenhaltigen Wasseranlageschlamm im Verhältnis gemischt, das den gesamten Kohlenstoffgehalt in der Mischung mindestens auf 40% regelt; der Gehalt des festen Bestandteiles in der Mischung beträgt 60 bis 98% des Gewichts, die Mischung beinhaltet ferner das aus modifiziertem Maismehl bestehende Bindemittel, das in der Lösung dispergiert ist, die Natron, Natriumhypochlorit, Kalktünche und bakterielle Alphaamylase beinhaltet, sowie thermoplastische Agens in der Menge von 0,05 bis 0,15% Gewichtsprozent, die durch Wasserdispersion von dem nativen Roggenmehl gebildet sind.

2. Die Mischung auf der Basis der Holzspäne gemäss Anspruch 1 **dadurch gekennzeichnet, dass** das Oxidiermittel des Salpeter-Typs die zwanzigprozentige Lösung von KNO₃ ist und das Bindemittel in der Mischung in der Menge von von 0,5 bis 1,5% des Gewichts ist.

## Revendications

1. Un mélange sur la base de sciures de bois pour la production du combustible en pellettes ou briquettes **caractérisé en ce que** le mélange contient un élément solide composé par les sciures de bois, par un oxydant du type de salpêtre et des boues ferrugineuses des installations de traitement de l'eau ; pour la préparation du mélange les sciures de bois sont imprégnées par une solution d'oxydant du type du salpêtre ; les sciures imprégnées sont séchées et mélangées avec la boue ferrugineuse des installations de traitement de l'eau dans un rapport ajustant le contenu total du carbone dans le mélange au moins à 40% ; le contenu d'élément solide dans le mélange est 60 à 98%m ; le mélange comprenant un liant formé par la farine de maïs dispersé dans la solution contenant hydroxide do sodium, hypochlorite de sodium, lait de chaux et α-amylase bactérienne et comprenant aussi un agent thermoplastique dans une quantité de 0,05 à 0,15%m formé par une dispersion aquatique de farine de seigle native.

2. Un mélange sur la base de sciures de bois selon revendication 1 **caractérisé en ce que** l'oxydant du type de salpêtre est une solution de 20% de KNO₃ et le liant est contenu dans le mélange dans une quantité de 0,5 à 1,5%m.
